# EUROPÄISCHE PATENTSCHRIFT

(11) **EP 2 946 699 B1**
(45) Veröffentlichungstag und Bekanntmachung des Hinweises auf die Patenterteilung: **31.07.2019**
(21) Anmeldenummer: 15163848.3
(22) Anmeldetag: 16.04.2015
(51) Int. Cl.: A47J 23/00

(54) **ENTKERNUNGSGERÄT**
DECORING APPARATUS
DÉNOYAUTEUR

(30) Priorität: 21.05.2014 DE 102014107135
(43) Veröffentlichungstag der Anmeldung: 25.11.2015
(73) Patentinhaber: Leifheit AG, 56377 Nassau (DE)
(72) Erfinder: Klotz, Markus, 56357 Hainau (DE)
(74) Vertreter: Bungartz Christophersen Partnerschaft mbB Patentanwälte

(56) Entgegenhaltungen:
- DE-A1- 1 529 246
- DE-A1- 2 930 723
- DE-A1- 3 601 079

## Beschreibung

Die Erfindung betrifft ein Entkernungsgerät für kernhaltige Lebensmittel nach dem Oberbegriff des Anspruch 1. Derartige Entkernungsgeräte werden insbesondere zum Entkernen von kernhaltigem Obst oder Gemüse in Form von Kirschen, Aprikosen, Pflaumen, Mirabellen, oder Oliven verwendet.

Die Ausstecheinheit der bekannten Entkernungsgeräte weist eine untere Stößelführung, in der der Stechstößel längs einer Arbeitsachse gegen die Kraft einer Rückstellfeder hin und her beweglich gehalten ist, und eine obere Stößelhandhabe auf, die zum Anstellen des unteren Bereichs des Stechstößels an die Bearbeitungsposition niederdrückbar ist.

Ein solches Entkernungsgerät zum Entkernen von Kirschen mittels eines Kernausstechers ist aus dem Produktkatalog Leifheit 2013, Seite 82, bekannt. Dieser Kirschentkerner weist einen Kernbehälter auf, auf den als Aufsatz ein deckelartiger Behälteraufsatz aufgesetzt ist. Dieser Behälteraufsatz ist an einer Seite trichterartig mit einem umlaufenden Kragen ausgebildet, so dass Kirschen in diesen trichterartigen Bereich eingefüllt werden können. Ein ähnliches Entkernungsgerät ist in der DE 36 01 079 A1 beschrieben.Auf der dem trichterartigen Bereich gegenüberliegenden Seite ist die Ausstecheinheit vorgesehen. Diese besteht aus einer Lebensmittelzuführung, die von dem trichterartigen Bereich beschickt wird. Hierzu ist ein leichtes Gefälle sowie ein Einlaufbereich vorgesehen, durch den die Kirschen zu einer Bearbeitungsposition rollen oder rutschen können, wobei sie hierbei hintereinander liegend vereinzelt werden. Die in der Bearbeitungsposition liegende Kirsche wird dann über einen Stechstößel entkernt.

Die Ausstecheinheit ist beispielsweise aus zwei längs der Bearbeitungsachse zueinander verschiebbaren und entweder unmittelbar aneinander oder an einen Zwischenteil gelagerten Bauteilen und einer dazwischen angeordneten Rückstellfeder gebildet. Das obere Bauteil weist den nach unten hervorspringenden Stechstößel auf. Die Rückstellfeder drückt die Ausstecheinheit auseinander, wodurch der untere Bereich in das untere Bauteil eingezogen wird, während durch einen Druck des Benutzers auf das obere Bauteil der Stechstößel unten aus dem unteren Bauteil heraus gedrückt wird und so gegen die Bearbeitungsposition und die darauf liegende Kirsche angestellt werden kann.

Wird der untere Bereich des Stechstößels mit seiner unteren Stanze gegen die Kirsche angestellt, drückt sich dieser in der Regel scharfkantige Bereich in die Kirsche und bei weiterem Vorschub deren Kern auf der gegenüberliegenden Seite heraus. Unterhalb der Bearbeitungsposition ist eine Matrize angeordnet, die eine Durchstecköffnung aufweist, die wiederum gerade so groß ist, dass ein üblicher Kirschkern hindurchpasst, das Fruchtfleisch aber zurückgehalten wird.

Nachdem der durch die Rückstellfeder getriebene Stechstößel wieder in die Ausgangsposition zurückgekehrt ist, fällt die entkernte Kirsche dann vorne aus dem Gerät heraus. Damit dies geschieht, ist die Ausstecheinheit schrägstellt und weist oberhalb der Bearbeitungsposition einen Abstreifer auf, der von dem Stechstößel durchdrungen ist. Das Lebensmittel liegt bei einer bevorzugten Ausgestaltung zunächst aufgereiht auf einer in Richtung der Bearbeitungsposition abfallenden Rampe, entweder Teil des Lebensmittelreservoirs oder ein gesonderter Bereich zwischen dem Lebensmittel Reservoire und der Bearbeitungsposition sein kann. Das unterste Lebensmittel dieser Reihe liegt dann auf der Bearbeitungsposition.

Beim Anstellen des Stechstößels an dieses Lebensmittel durchstößt der Stechstößel das Lebensmittel und treibt den Kern auf der gegenüberliegenden Seite in den Kernbehälter. Anschließend wird der Stechstößel durch die Rückstellkraft der Rückstellfeder wieder in die Ausgangsposition zurück bewegt, wobei der untere Bereich des Stechstößels das Lebensmittel dann mitnimmt, bis es an dem Abstreifer vom Stechstößel gelöst wird. Durch den nach vorne schräg gestellten Stechstößel fällt es dann nicht mehr auf die Bearbeitungsposition zurück, sondern senkrecht nach unten auf die rutschenartig ausgebildete Lebensmittelausgabe, von der es dann entweder seitlich aus dem Gerät herausfällt oder in einen Behälter für das entkernte Lebensmittel fallen kann.

Diese bekannten Kirschentkerner sind in ihrer Funktion einfach zu bedienen und zuverlässig. Sie haben jedoch den Nachteil, dass der Stechstößel von der Oberseite des Gerätes nach oben ragt, so dass der Küchenschrank, der das Gerät zur Lagerung aufnehmen muss, einen vergleichsweise großen Abstand der Regalböden benötigt.

Eine zu der oben beschriebenen Vorrichtung ähnliche Vorrichtung zum Entkernen von Steinobst ist aus der DE 29 30 723 A1 bekannt. Hier wird ebenfalls ein Stechstößel gegen ein auf einer Auflage liegendes Steinobst angestellt und hierüber der Kern ausgestanzt. Auch diese Vorrichtung leidet unter dem Nachteil, dass der Stechstößel vergleichsweise viel Stauraum benötigt.

Aus der CA 26 58 892 A1 ist eine zangenartige Vorrichtung zum Entkernen bekannt, die im hinteren Bereich eine Sperre aufweist, die eine Öffnung der geschlossenen Zange blockiert. Diese Vorrichtung lässt sich zwar platzsparend lagern, hat aber den Nachteil, dass sie keine Auffangmöglichkeit für die ausgestanzten Kerne und kein Reservoir für zu entkernende Lebensmittel besitzt.

Aus der DE 41 04 414 C1 ist schließlich eine Vorrichtung zum Entkernen von Lebensmitteln bekannt, bei der anstelle eines länglichen Stößels eine niederdrückbare Wippe verwendet wird, die einseitig am Rand eine Auffangbehälters für Kerne angelenkt ist und an einem, gegen das Lebensmittel zum Ausstanzen des Kern anstellbaren freien Ende das Stanzwerkzeug aufweist. Obwohl durch die wippenartige Ausgestaltung des Werkzeugs die Bauhöhe geringer ist als bei den eingangs genannten Vorrichtungen, benötigt der Schwenkarm doch ebenfalls Stauraum.

Die DE 20 30 723 A1 zeigt ein Entkernungsgerät bei dem auf einen Auffang- und Vorratsbehälter ein Früchteaufsatz mit einem Entsteinungswerkzeug zum Entsteinen von Steinobst aufgesetzt ist, wobei der Früchteaufsatz als Deckel ausgebildet ist und lösbar mit dem Behälter verbunden ist. Der Vorteil dieser Lösung besteht darin, dass eine Behälter vorgesehen ist, in den die Früchte nach dem Entkernen hineinfallen können. Dies verhindert eine Verschmutzung der Umgebung. Obwohl hier das Werkzeug zusammen mit dem Früchteaufsatz abnehmbar ist, müssen allerdings beide Elemente doch getrennt voneinanderim Schrank untergebracht werden.

Aus der DE 1 529 246 A1 ist ein Entkernungsgerät ohne Auffangbehälter bekannt, dass über eine Klemmverbindung an einer Platte, zum Beispiel der Küchenarbeitsplatte, befestigt werden kann. Hier ist kein Aufnahmegefäß vorgesehen, so dass das entkernte Gut separat so aufgefangen werden muss, dass es die Umgebung nicht verschmutzt, oder so dass ein Herunterfallen auf die Arbeitsplatte toleriert werden muss. Ferner muss das Gerät entweder dauerhaft aufgestellt werden oder im Bedarfsfall vergleichsweise zeitaufwändig montiert werden.

Aufgabe der Erfindung ist es daher, ein Entkernungsgerät mit einem Auffangbehälter für das entkernte Gut zu schaffen, das bei einem geringeren Raumbedarf leicht lagerbarist.

Diese Aufgabe wird nach der Erfindung durch ein Entkernungsgerät nach Anspruch 1 gelöst.

Durch die erfindungsgemäße Ausgestaltung des Entkernungsgerätes kann nun die Ausstecheinheit nicht nur vollständig abgenommen werden, sondern auch nach Zusammendrücken von der Rückhaltevorrichtung arretiert und in den Kernbehälter (1) eingelegt werden. Dies ist besonders vorteilhaft in Verbindung mit einem Kernbehälter, der schalen-, topf- oder schüsselartig ausgebildetist. Dieser weist dann beispielsweise einen oberen Rand auf, auf den der Behälteraufsatz aufgesetzt werden kann. Dieser Behälteraufsatz weist die Zuführung für die zu verarbeitenden Lebensmittel auf. Dies kann ein trichterartiger Einlaufbereich sein, der zum Beispiel einen umlaufenden Kragen zur Bildung eines Reservoirs für die Lebensmittel aufweisen kann.

Von diesem Lagerbereich für das unverarbeitete Lebensmittel erstreckt sich dann eine Zuführung, die an einer Bearbeitungsposition unterhalb des Stechstößels endet. Die Lebensmittel werden dann, in der Regel getrieben durch die Schwerkraft, längs dieser Zuführung voneinander getrennt nacheinander zur Bearbeitungsposition bewegt. Dort liegen sie dann bevorzugt auf einer Stanzmatrize auf, die eine Durchgangsöffnung aufweist. Der Benutzer wird dann den Stechstößel herunterdrücken, wobei hierdurch der untere Bereich des Stechstößels heruntergedrückt wird und sich in das Fruchtfleisch des Lebensmittels drückt. Ein weiterer Vorschub des Stechstößels drückt dann den Kern durch den unteren Teil des Lebensmittels und die Durchgangsöffnung in den Kernbehälter. Nun lässt der Benutzer den Stechstößel wieder los, der - getrieben durch die Rückstellfeder-in die Ausgangsposition zurückkehrt.

Die Ausstecheinheit ist als separate Einheit ausgebildet, die lösbar mit dem Kernbehälter verbunden ist. Diese Verbindung kann mit dem unteren Teil des Kernbehälters oder bevorzugt auch mit dem Behälteraufsatz als Teil des Kernbehälters verbunden sein. Die Stanzmatrize ist bevorzugt aus einem elastischen Material, zum Beispiel Gummi gefertigt, kann aber auch als Kunststoff- oder Metallbauteil ausgebildet sein.

Die Ausstecheinheit ist dabei nicht nur abnehmbar, sondern auch mit einer so genannten "Lock-Down"-Funktion versehen. Hierbei kann über eine Rückhaltevorrichtung die zusammengedrückte Ausstecheinheit festgelegt werden, so dass die Funktion der Rückstellfeder aufgehoben ist. Eine derart festgelegte Ausstecheinheit benötigt weniger Raum, so dass es nun möglich ist, diese Ausstecheinheit zum Lagern des Gerätes in den Kernbehälter einzulegen.

Die Rückhaltevorrichtung zur Realisierung der "Lock-Down"-Funktion ist durch ein verschiebbar, schwenkbar oder drehbar gelagertes Verriegelungselement gekennzeichnet. Das Verriegelungselement hat durch die nachfolgend beschriebenen Konstruktionen eine Doppelfunktion. Zum einen kann es in einer Position die Ausstecheinheit an dem Behälteraufsatz oder dem Kernbehälter verriegeln. Wird es in die andere Extremposition verlagert, kann es dann zum einen die Verriegelung der Ausstecheinheit freigeben und zum anderen den niedergedrückten Stechstößel verriegeln.

Eine mögliche Konstruktion eines solchen Bauteils weist ein Verriegelungselement auf, das um eine Schwenkachse im unteren Bereich an der Ausstecheinheit gelagert und nach der Art einer Wippe ausgebildet ist. An den beiden Enden sind dann jeweils Widerlagerkanten vorgesehen, von denen eine zum Verriegeln der Ausstecheinheit mit dem Kernbehälter in einer ersten Position des Verriegelungselementes eine korrespondierende Nut oder Kante am Kernbehälter zu hintergreifen vermag.

Wird das Verriegelungselement dann um die Schwenkachse geschwenkt, kommt zum einen die Widerlagerkante außer Eingriff mit der korrespondierenden Nut oder Kante des Kernbehälters. Erreicht das Verriegelungselement die gegenüberliegende Extremposition der Schwenkbewegung, greift dann eine am anderen Ende angeordnete Widerlagerkante in eine Nut ein bzw. über oder hintergreift eine Rückhaltekante. Die Nut bzw. die Rückhaltekante ist hier am niedergedrückten, oberen Teil des Stechstößels, insbesondere im Bereich eines oberen Handgriffes oder einer Handballenauflage, vorgesehen. Hierdurch kann das Verriegelungselement den oberen Teil des Stechstößels in einer unteren Position halten, wobei es hierzu im unteren Bereich der Ausstecheinheit an einem Gehäuseteil gelagert ist.

Die oben beschriebene Ausgestaltung hat den Vorteil, dass mit einem beweglichen Bauteil sowohl die Verriegelung am Kernbehälter bzw. Behälteraufsatz als auch die Rückhaltevorrichtung gebildet ist, die die "Lock-Down"-Funktion bereitstellt.

Ferner kann bei einer weiteren Ausgestaltung der Erfindung die Durchstecköffnung der Stanzmatrize genutzt werden, um eine Rückhaltevorrichtung umzusetzen. Dies nutzt die Tatsache, dass der Stechstößel mit seinem unteren Bereich durch diese Stanzmatrize hindurch ragt, wenn er seine maximale Position erreicht. Sofern sich der untere Stanzbereich des Stechstößels nach außen erstreckt, zum Beispiel sternförmig ausgebildet ist, und gleichzeitig nicht rotationssymmetrisch ausgebildet ist, kann er durch Verdrehen des Stechstößels oder des unteren Bereiches des Stechstößels einen Randbereich der Durchgangsöffnung hintergreifen und so die Rückhaltevorrichtung bilden.

Eine andere Alternative eine Rückhaltevorrichtung besteht darin, dass die Stanzmatrize verschiebbar in der Ausstecheinheit oder dem Behälteraufsatz gelagert ist, wobei sich an die Durchgangsöffnung ein Langloch anschließt, so dass bei vollständig niedergedrücktem Stechstößel die Stanzmatrize um eine kleine Strecke verschoben wird, so dass der oberhalb des Stanzwerkzeuges vorgesehene Stiel des Stechstößels dann in das Langloch verlagert wird und das flache Stanzwerkzeug den Bereich um das Langloch herum nicht passieren kann und so die Rückhaltevorrichtung gebildet ist.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine erfindungsgemäße Entkernungsvorrichtung in einer dreidimensionalen Ansicht,
- Fig. 2: die Ausgestaltung der Erfindung nach Figur 1 in einer Ansicht von vorne,
- Fig. 3: dass in den Figuren 1 und 2 dargestellte Entkernungsgerät in einer Explosionsdarstellung,
- Fig. 4: die Ausstecheinheit des in den Figuren 1-3 dargestellten Entkernungsgerätes in zusammengedrückter Stellung,
- Fig. 5: die in Figur 4 dargestellte Ausstecheinheit in einer Explosionsdarstellung ,
- Fig. 6: die Aufnahme der Stanzmatrize der Entkernungsvorrichtung nach den Figuren 1-5 in einer Detailansicht,
- Fig.7: die in Figur 4 dargestellte Ausstecheinheit aus einer anderen Perspektive,
- Fig. 8: den Bereich der Stößelverriegelung in einer Detailansicht,
- Fig. 9: eine zweite Ausgestaltung der Entkernungsvorrichtung in einer dreidimensionalen Ansicht,
- Fig. 10: die Ausgestaltung der Erfindung nach Figur 9 in einer Ansicht von vorne,
- Fig. 11: die Ausgestaltung der Erfindung nach den Figuren 9 und 10 aus einer anderen Perspektive mit verriegeltem Stechstößel,
- Fig. 12: die in den Figuren 9, 10 und 11 gezeigte Ausgestaltung der Erfindung in einer Ansicht von oben und
- Fig. 13: eine erfindungsgemäße Entkernungsvorrichtung mit in den Kernbehälter eingelegter und verriegelter Ausstecheinheit.

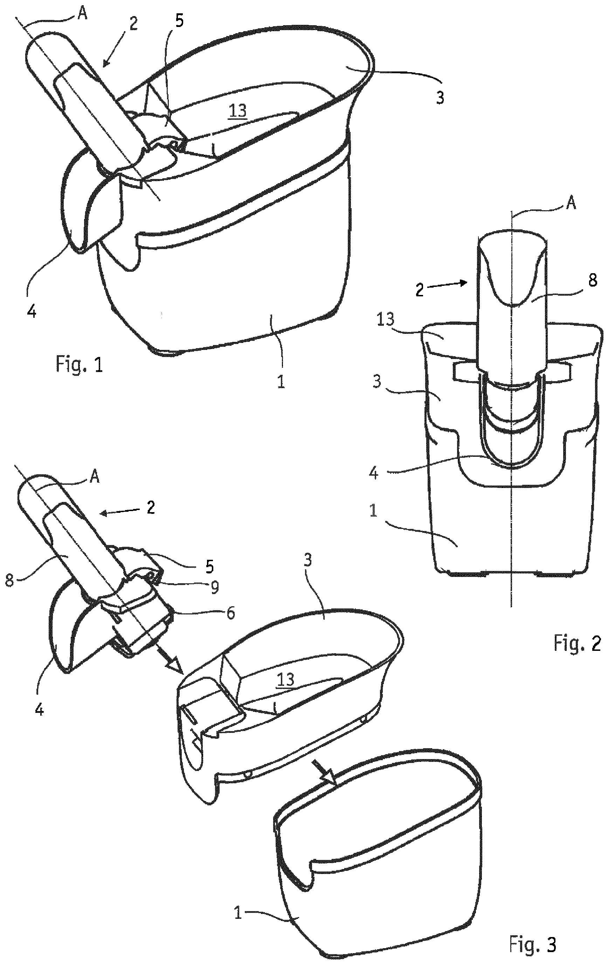

In Figur 1 ist eine bevorzugte Ausgestaltung der Erfindung in Form eines Obstentkerners dargestellt. Dieser besteht aus einem topfartigen Kernbehälter 1, auf den ein Behälteraufsatz 3 aufgesetzt ist. Der Behälteraufsatz 3 wiederum weist einen nach oben hervorspringenden, umlaufenden Kragen auf, so dass sich ein schüsselartiger Bereich oberhalb des Behälteraufsatzes 3 ergibt, in den Obst eingefüllt werden kann.

Nicht sichtbar ist eine Zuführung, über die einzelne Obstteile zu einer Bearbeitungsposition unterhalb eines Stechstößels 7 einer Ausstecheinheit 2 gelangen können. Die Ausstecheinheit 2 ist im dargestellten Ausführungsbeispiel in einem zusammengedrückten Zustand arretiert. Hierzu weist sie eine Rückhaltevorrichtung auf, die vom Benutzer nach Zusammendrücken der Ausstecheinheit 2 aktiviert werden kann.

Figur 2 zeigt das Entkernungsgerät aus Figur 1 in einer Ansicht von vorne. Im vorderen Bereich ist eine Lebensmittelausgabe 4 vorgesehen, aus der die entkernten Lebensmittel herausrollen bzw. -rutschen. Alternativ kann natürlich der Kernbehälter 1 auch mit zwei Kammern versehen sein, von denen eine dann unterhalb dieser Lebensmittelausgabe 4 vorgesehen ist, so dass die entkernten Lebensmittel in diese zweite Kammer des Kernbehälters 1 fallen können.

Figur 3 zeigt die Ausgestaltung des Entkernungsgerätes aus den Figuren 1 und 2 in einer ersten Explosionsdarstellung. Zu erkennen ist hier, dass das Entkernungsgerät im Wesentlichen aus drei Komponenten besteht, einmal dem Kernbehälter 1, dann dem Behälteraufsatz 3 als Teil des Kernbehälters 1 mit dem Lebensmittelreservoir 13 und dann der Ausstecheinheit 2, die den längs der Arbeitsachse A hin und her beweglichen Stechstößel 7 (hier nicht sichtbar) aufweist.

Die Ausstecheinheit 2 ist mit einer Stößelverriegelung 5 versehen, die am rechten Teil des unteren Gehäuses der Ausstecheinheit 2 zwischen zwei Extrempositionen hin und her kippbar gelagert ist. Die Stößelverriegelung 5 kann in einer ersten Position mit seitlich bevorstehenden Verriegelungsnasen 9 eine Befestigung mit der Ausstecheinheit 2 bilden. Nach Einstecken der Ausstecheinheit 2 in die Aufnahme im oberen Behälteraufsatz 3 (linker Teil des dargestellten Behälteraufsatzes 3) wird die Stößelverriegelung 5 nach unten gekippt, so dass die Verriegelungsnasen 9 in korrespondierende Aufnahmen am Behälteraufsatz 3 eingreifen und so die Ausstecheinheit 2 mit dem Behälteraufsatz 3 verriegeln.

In der anderen Position, wenn also die Stößelverriegelung 5 wieder zurückgekippt wird, gerät zum einen die oben beschriebene Verriegelung außer Eingriff, so dass die Ausstecheinheit 2 von dem Behälteraufsatz 3 abgenommen werden kann. Gleichzeitig greift aber der gegenüberliegende Bereich der Stößelverriegelung 5, die hier von einer vergleichsweise einfachen Wippe gebildet ist, die um eine zur Arbeitsachse rechtwinklige Schwenkachse schwenkbar am unteren Gehäusebereich der Ausstecheinheit 2 gelagert ist, in eine Nut einer oberen Stößelhandhabe 8 ein und bildet so die Rückhalteeinrichtung, die den Stechstößel 7 im zusammengedrückten Zustand hält.

Die obere Stößelhandhabe 8 ist hier als oberer Griff ausgebildet, den der Benutzer zum Herunterdrücken des Stechstößels 7 greifen kann. Der untere Bereich weist einen in Richtung der Stößelverriegelung 5 hervorspringenden Flansch auf, der wiederum den Rückhalterand bildet, der von der Stößelverriegelung 5 aus deren Sicht hintergriffen wird, was natürlich bedeutet, dass sich die Stößelverriegelung 5 bei Erreichen der Extremposition nach einem Kippen in Richtung der Arbeitsachse A über diesen Flansch legt.

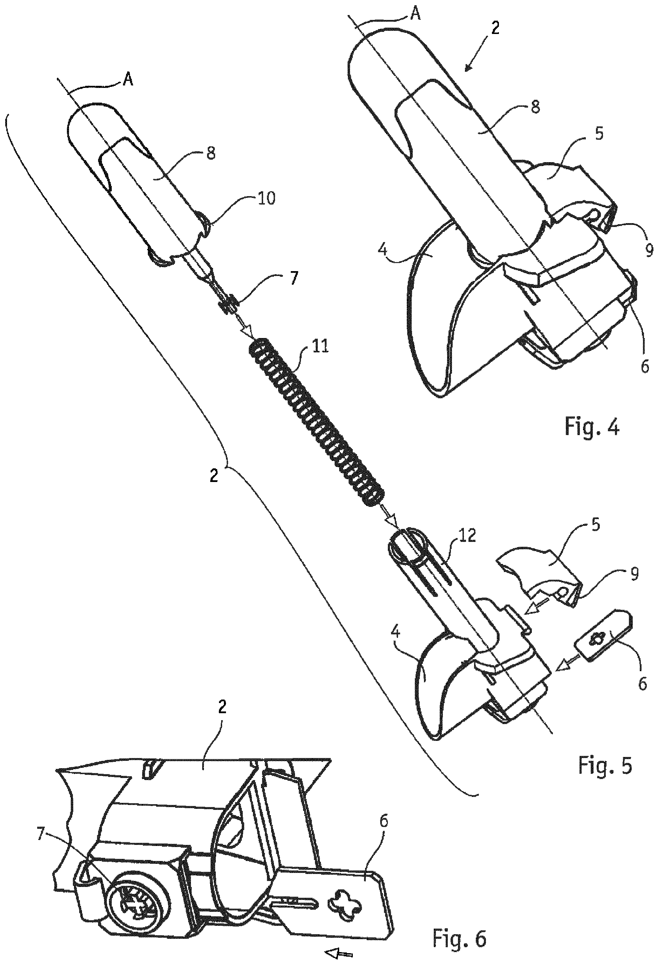

In Figur 4 ist die zusammengedrückte Ausstecheinheit 2 in einer vergrößerten Darstellung nochmals in einer anderen Perspektive gezeigt. Insbesondere ist hier die schwenkbare Lagerung der Wippe, die die Stößelverriegelung 5 bildet, gut zu erkennen.

Figur 5 zeigt die Ausstecheinheit 2 in einer Explosionsdarstellung, hier ist zu erkennen, dass die Ausstecheinheit 2 aus einer unteren Stößelführung 12, einer Rückstellfeder 11 sowie einer oberen Stößelhandhabe 8 besteht. An der oberen Stößelhandhabe 8 ist nach unten hervorspringend der Stechstößel 7 vorgesehen.

Zum Ausstechen des Kerns aus dem Lebensmittel wird der Stechstößel 7 in die Stößelführung 12 hineingedrückt bis er unten durch die Stanzmatrize 6 hindurch dringt. Dabei nimmt er den Kern des auf der Stanzmatrize 6 liegenden Lebensmittels mit und drückt diesen in den Kernbehälter 1 (hier nicht dargestellt).

Figur 5 zeigt auch die gelenkige Verbindung der Wippe der Stößelverriegelung 5 mit dem unteren Teil der Stößelführung 12. In Figur 6 ist die Aufnahme für die Stanzmatrize 6 im unteren Teil der Ausstecheinheit 2 dargestellt. Zu erkennen ist hier die im Wesentlichen kreuzförmige Durchgangsöffnung, durch die der Stechstößel 7, der eine korrespondierende Grundform aufweist, hindurch gedrückt werden kann.

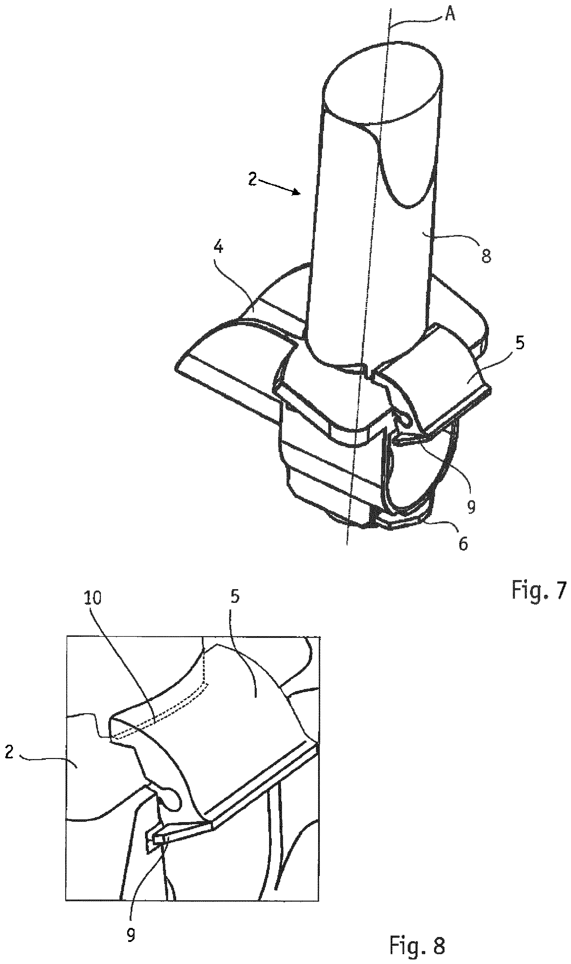

In den Figuren 6 und 8 ist nochmals die Stößelverriegelung 5 mit den Verriegelungsnasen 9 sowie dem oberen Stößelriegel 10 dargestellt.

Zu erkennen ist insbesondere in Figur 8, dass die griff- oder hülsenartige, obere Stößelhandhabe 8 einen hier nach vorne vorspringenden Rand als Stößelriegel 10 aufweist, der im niedergedrückten Zustand von der Stößelverriegelung 5 überdeckt werden kann, so dass die Rückstellfeder 11 diesen Stößelriegel 10 von unten gegen die, die Stößelverriegelung 5 bildende Wippe drückt und so blockiert.

Gleichzeitig ist in Figur 8 zu erkennen, dass die Verriegelungsnasen 9 gerade außer Eingriff mit korrespondierenden Aufnahmen im oberen Behälteraufsatz 3 sind. Hier ist also gerade diese Verriegelung gelöst, so dass die Ausstecheinheit 2 nun vom oberen Behälteraufsatz 3 abgenommen werden könnte. Besonders vorteilhaft ist es dann, dass der Kernbehälter 1 so groß ist, dass er die zusammengedrückte und verriegelte Ausstecheinheit 2 aufnehmen kann.

Ferner kann der Behälteraufsatz 3 auch so ausgebildet sein, dass die Öffnung, die sich nach Entnahme der Ausstecheinheit 2 ergibt, über einen Deckel oder ein sonstiges Verschlussmittel verschließbar ist. Dies ermöglicht es, den Kernbehälter 1 nach Ausleeren der Kerne als Vorratsbehälter zu benutzen.

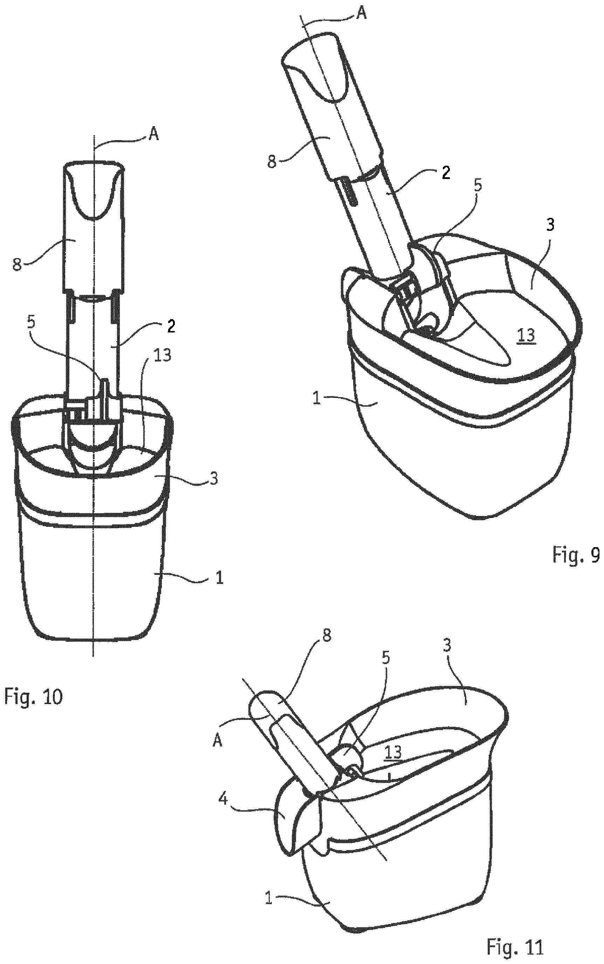

In den Figuren 9-12 ist eine weitere Ausgestaltung eines erfindungsgemäßen Entkernungsgerätes dargestellt. Dieses Entkernungsgerät weist, wie die oben beschriebene Ausgestaltung, eine Stößelverriegelung 5 auf, die an der Ausstecheinheit 2 angeordnet ist. Auch hier ist die Ausstecheinheit 2 in einer Aufnahme im Behälteraufsatz 3 gehalten, der wiederum auf dem Kernbehälter 1 aufsitzt. Natürlich kann die Aufnahme in allen Fällen auch am Kernbehälter 1 vorgesehen sein.

Im Gegensatz zur oben beschriebenen Ausgestaltung des Entkernungsgerätes ist hier die Stößelverriegelung 5 nicht schwenkbar, sondern quer verschiebbar an der Ausstecheinheit 2 gelagert. Die beiden Extrempositionen sind also bei der in Figur 10 dargestellten Perspektive die rechte und linke Stellung der quer verschiebbaren Stößelverriegelung 5. Grundsätzlich kann diese Stößelverriegelung 5 nun entweder in der rechten Stellung die Ausstecheinheit 2 mit dem Behälteraufsatz 3 verriegeln und in der gegenüberliegenden, linken Stellung die oben beschriebene "Lock-down"-Position bereitstellen, also die obere Stößelhandhabe 8 in der niedergedrückten Stellung an der unteren Stößelführung 12 verriegeln. Hierzu sind jeweils an den beiden Bauteilen Ausstecheinheit und Behälteraufsatz bzw. Kernbehälter entsprechende Rückhaltekanten vorgesehen, die in einer Stellung von der Stößelverriegelung 5 hintergriffen werden und in der jeweils anderen gerade nicht hintergriffen werden.

Alternativ kann die Verriegelung auch in der mittigen Position erfolgen, wobei hier dann in den beiden seitlichen Extrempositionen die Verriegelung mit dem Behälteraufsatz 3 realisiert werden kann, so dass der Benutzer wahlweise nur den Schiebeknopf der Stößelverriegelung 5 nach rechts oder links schieben muss.

Ein besonderer Vorteil der Kombination der Funktionen durch das eine Verriegelungselement der Stößelverriegelung 5 liegt darin, dass der Benutzer zum Entriegeln der Ausstecheinheit in der "Lock-down"-Position gleichzeitig diese im Behälteraufsatz 4 fixieren muss, solange sich die Ausstecheinheit 2 in der Aufnahme des Behälteraufsatzes 3 befindet.

Sollte eine zusätzliche Sicherheit gewünscht sein, kann eine weitere vorteilhafte Ausgestaltung die Beweglichkeit der Stößelverriegelung 5 davon abhängig machen, dass sich die Ausstecheinheit 2 in der Aufnahme befindet. Diese Sicherheitsmaßnahme kann in Verbindung mit allen Formen der Stößelverriegelung 5 umgesetzt werden. Sie besteht zum Beispiel darin, dass ein gegen die Kraft einer Rückstellfeder beweglich an der unteren Stößelführung 12 gelagertes Sperrglied vorgesehen wird, das einerseits innerhalb des Bewegungsbereichs des Sperrelementes der Stößelverriegelung 5 liegt und andererseits durch das Einsetzen der Ausstecheinheit 2 in die Aufnahme des Behälteraufsatzes 3 so weit verlagert wird, dass es außerhalb dieses Bewegungsbereiches gerät.

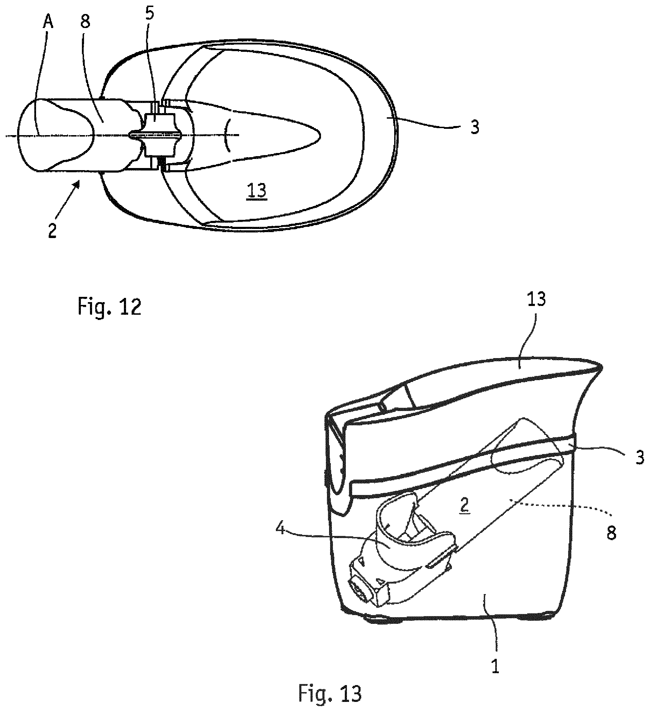

Die dargestellten und beschriebenen Ausgestaltungen der Stößelverriegelung 5 sind nur beispielhafte Möglichkeiten der Realisierung einer solchen Verriegelung. Durch die abnehmbare Ausstecheinheit 2 kann nun nach Aktivierung der "Lock-down"-Funktion die in der zusammengedrückten Stellung zusammengehaltene Ausstecheinheit 2 zum Lagern des Entkernungsgerätes in den Kernbehälter 1 eingelegt werden, so dass das Entkernungsgerät weniger Platz im Schrank beansprucht. Dies ist in Figur 13 dargestellt.

### Bezugszeichenliste:

- 1: Kernbehälter
- 2: Ausstecheinheit
- 3: Behälteraufsatz
- 4: Lebensmittelausgabe
- 5: Stößelverriegelung
- 6: Stanzmatrize
- 7: Stechstößel
- 8: Stößelhandhabe
- 9: Verriegelungsnase
- 10: Stößelriegel
- 11: Rückstellfeder
- 12: Stößelführung
- 13: Lebensmittelreservoir

- A: Arbeitsachse

## Patentansprüche

1. Entkernungsgerät für kernhaltige Lebensmittel mit
• einem Kernbehälter (1) zur Aufnahme von aus dem Lebensmittel herausgedrückten Kernen,
• einer Lebensmittelzuführung mit einem Lebensmittelreservoir (13),
• einer von der Lebensmittelzuführung (13) beschickbaren Auflage, auf der das Lebensmittelin einer Bearbeitungsposition auflegbar ist, und
• einer, in einer Aufnahme gehaltenen Ausstecheinheit (2), die zumindest einen, gegen die Bearbeitungsposition anstellbaren Stechstößel (7) zum Einstechen in das Lebensmittel und Ausdrücken des Kerns aus dem Lebensmittel aufweist,
wobei die Ausstecheinheit (2) eine untere Stößelführung (12), in der der Stechstößel (7) längs einer Arbeitsachse (A) gegen die Kraft einer Rückstellfeder (11) hin und her beweglich gehalten ist, und eine obere Stößelhandhabe (8) aufweist, die zum Anstellen des unteren Bereichs des Stechstößels (7) an die Bearbeitungsposition niederdrückbar ist,
**dadurch gekennzeichnet, dass** die Ausstecheinheit (2) lösbar in der Aufnahme gehalten ist und das Entkernungsgerät eine Rückhaltevorrichtung aufweist, die von einer Stößelverriegelung (5) in Form eines, von einer ersten Verriegelungsposition in eine zweite Verriegelungsposition beweglichen Verriegelungselements gebildet ist, das derart an der Ausstecheinheit (2) angelenkt und ausgebildet ist, dass es in der ersten Verriegelungsposition bei Freigabe der Rückhaltevorrichtung der Ausstecheinheit (2) mit einer ersten Widerlagerkante eine korrespondierende Widerlagerkante zum lösbaren Festlegen der Ausstecheinheit (2) in der Aufnahme zu hintergreifen vermag und in der zweiten Verriegelungsposition zur Aktivierung der Rückhaltevorrichtung mit einer zweiten Widerlagerkante eine korrespondierende Widerlagerkante zum lösbaren Festlegen der Stößelhandhabe (8) in der niedergedrückten Stellung zu hintergreifen vermag, wobei der Kernbehälter (1) eine derartige Größe aufweist, dass die von der von der Rückhaltevorrichtung in der zusammengedrückten Position arretierte Ausstecheinheit (2) in den Kernbehälter (1) einlegbar ist.

2. Entkernungsgerät nach Anspruch 1, **dadurch gekennzeichnet, dass** das Verriegelungselement der Stößelverriegelung (5) dreh- oder schwenkbar an der Ausstecheinheit (2) befestigt ist.

3. Entkernungsgerät nach Anspruch 1, **dadurch gekennzeichnet, dass** das Verriegelungselement der Stößelverriegelung (5) längsverschiebbar an der Ausstecheinheit (2) befestigt ist, wobei die Verschieberichtung insbesondere rechtwinklig zur Arbeitsachse (A) angeordnet ist.

4. Entkernungsgerät nach Anspruch 1, **dadurch gekennzeichnet, dass** die Rückhaltevorrichtung von einem Schieber oder Kipphebel gebildet ist, der nach manueller Bewegung in den Bewegungsbereich des Stechstößels (7) eine Widerlagerkante des Stechstößels (7) mit einem Sperrbereich derart zu hintergreifen vermag, dass die Rückstellfeder (11) die Widerlagerkante gegen den Sperrbereich drückt und der Stechstößel (7) in der niedergedrückten Position gehalten ist.

5. Entkernungsgerät nach Anspruch 1, **dadurch gekennzeichnet, dass** die Ausstecheinheit (2) eine Stanzmatrize (6) aufweist, die aus Sicht des Stechstößels (7) unterhalb der Bearbeitungsposition angeordnet ist und die zumindest eine Durchstecköffnung aufweist, durch die der untere Teil des Stechstößels (7) zum Ausstechen und Abführen des Kerns hindurchführbar ist, wobei der Stechstößel (7) drehbar in der Stößelführung (12) gelagert ist oder einen drehbaren, nicht rotationssymetrischen unteren Abschnitt aufweist, und die Durchstecköffnung der Stanzmatrize (6) derart ausgebildet ist, dass der untere Teil des Stechstößels (7) unter Belassung eines Spiels, insbesondere eines umlaufenden Spaltes, durch die Durchstecköffnung durchführbar und nach Drehen des ganzen Stechstößels (7) oder nur des unteren Abschnitts zur Bildung der Rückhaltevorrichtung einen angrenzenden Randbereich der Durchstecköffnung hintergreift.

6. Entkernungsgerät nach Anspruch 4, **dadurch gekennzeichnet, dass** die Stanzmatrize (6) ein Abstreifer auf einem elastischen Material, insbesondere aus Gummi, ist.

7. Entkernungsgerät nach einem der vorhergehenden Ansprüche, **dadurch gekennzeichnet, dass** der Kernbehälter (1) einen oberen Behälterrand mit einer hiervon begrenzten Öffnung ausweist, wobei auf den Behälterrand ein die Aufnahme für die Ausstecheinheit (2) aufweisender, oberer Behälteraufsatz (3) aufgesetzt ist, an dem die Ausstecheinheit (2) lösbar befestigt ist und das Lebensmittelreservoir (13) aufweist, das insbesondere von der Oberseite des Behälteraufsatzes (3) und einem von dieser Oberseite nach oben herspringenden Rand begrenzt ist.

8. Entkernungsgerät nach einem der beiden vorhergehenden Ansprüche, **dadurch gekennzeichnet, dass** die Stößelführung (12) oberhalb des eingelegten Lebensmittels einen Abstreifer aufweist, der bei Rückstellung des Stechstößels (7) das an dem unteren Teil des Stechstößels (7) hängende Lebensmittel von diesem abzustreifen vermag, wobei die Arbeitsachse (A) zur Vertikalen um einen Winkel verkippt ist und der Abstreifer oberhalb einer vor der Bearbeitungsposition angeordneten rutschenartig nach unten gekippten Lebensmittelausgabe (4) angeordnet ist.

## Claims

1. Coring device for foodstuffs containing a core, with
• a core holder (1) for receiving cores pressed out of the foodstuff,
• a foodstuff feeder with a foodstuff reservoir (13),
• a support which can be fed by the foodstuff feeder (13), on which support the foodstuff can be placed in a processing position, and
• a cutting-out unit (2) retained in a holder, wherein said cutting-out unit has at least one piercing rod (7), usable around the operating position to pierce the foodstuff and to press the core out of the foodstuff,
wherein the cutting-out unit (2) has a lower rod guide (12), in which the piercing rod (7) is held and is movable lengthwise back and forth along a working axis (A) against the force of a restoring spring (11), and an upper rod handle (8), which can be pressed down to activate the lower area of the piercing rod (7) at the processing position,
**characterised in that** the cutting-out unit (2) is held detachably in the holder and the coring device has a retaining device which is formed by a rod lock (5) in the form of a locking element movable from a first locking position to a second locking position, said element being hinged to the cutting-out unit (2) and is formed such that, in the first locking position, with the release of the retaining device of the cutting-out unit (2) with a first abutment edge, said element is able to engage behind a corresponding abutment edge for the detachable immobilisation of the cutting-out unit (2) in the holder and, in the second locking position, for activating the retaining device with a second abutment edge, said element is able to engage behind a corresponding abutment edge for the detachable immobilisation of the rod handle (8) in the depressed position, wherein the size of the core holder (1) is such that the cutting-out unit (2) can be placed in the core holder (1) locked in the pressed position by the retaining device.

2. Coring device according to claim 1, **characterised in that** the locking element of the rod lock (5) is secured on the cutting-out unit (2) so that it can rotate or pivot.

3. Coring device according to claim 1, **characterised in that** the locking element of the rod lock (5) is secured on the cutting-out unit (2) so that it can be moved longitudinally, wherein the movement direction is arranged in particular at right angles to the working axis (A).

4. Coring device according to claim 1, **characterised in that** the retaining device is formed by a slider or rocker lever, which, after manually moving into the movement range of the piercing rod (7) is able to engage behind an abutment edge of the piercing rod (7) with a locking area such that the restoring spring (11) presses the abutment edge against the locking area and the piercing rod (7) is retained in the depressed position.

5. Coring device according to claim 1, **characterised in that** the cutting-out unit (2) has a punch die (6), which, viewed from the piercing rod (7), is arranged underneath the operating position and which has at least one through opening, through which the lower part of the piercing rod (7) can be guided to punch out and discharge the core, wherein the piercing rod (7) is housed to rotate in the rod guide (12) or has a rotatable, non-rotationally symmetric lower section, and the through opening of the punch die (6) is formed such that the lower part of the piercing rod (7) can be guided through the through opening leaving a gap, in particular a circumferential gap, and after rotating the entire piercing rod (7) or only the lower section to form the retaining device engages behind an adjoining edge area of the through opening.

6. Coring device according to claim 4, **characterised in that** the punch die (6) is a scraper of an elastic material, made in particular of rubber.

7. Coring device according to any one of the preceding claims, **characterised in that** the core holder (1) has an upper container edge with an opening delimited by said edge, wherein, on the edge of the container an upper container attachment (3) is located having the holder for the cutting-out unit (2), on which attachment the cutting-out unit (2) is secured detachably and has the foodstuff reservoir (13), which is delimited in particular by the upper side of the container attachment (3) and an edge extending upwards from this upper side.

8. Coring device according to any one of the two preceding claims, **characterised in that** the rod guide (12) has a scraper above the deposited foodstuff, which, in repositioning the piercing rod (7), is able to scrape the foodstuff suspended on the lower part of the piercing rod (7) from it, wherein the working axis (A) is tilted to the vertical by an angle and the scraper is arranged above a foodstuff outlet (4) arranged in front of the operating position tilted downwards like a slide.

## Revendications

1. Dénoyauteur d'aliments à noyaux avec
• un collecteur de noyaux (1) pour la réception des noyaux extraits des aliments,
• une amenée des aliments avec un réservoir d'aliments (13),
• un support pouvant être alimenté par l'amenée des aliments (13), sur lequel l'aliment peut être déposé dans une position de traitement, et
• une unité de découpe à l'emporte-pièce (2) maintenue dans un logement, qui présente au moins un poussoir de perforation (7) pouvant être appuyé contre la position de traitement pour transpercer l'aliment et extraire le noyau de l'aliment,
l'unité de découpe à l'emporte-pièce (2) présentant un guide de poussoir (12), dans lequel le poussoir de perforation (7) est maintenu mobile dans un mouvement de va-et-vient le long d'un axe de travail (A) contre la force d'un ressort de rappel (11), et une poignée de poussoir (8) supérieure qui peut être enfoncée pour régler la zone inférieure du poussoir (7) en position de traitement,
**caractérisé en ce que** l'unité de découpe à l'emporte-pièce (2) est maintenue détachable dans le logement et le dénoyauteur présente un dispositif de retenue, qui est formé d'un verrouillage de poussoir (5) sous la forme d'un élément de verrouillage mobile d'une première position de verrouillage à une deuxième position de verrouillage, qui est articulé et formé sur l'unité de découpe à l'emporte-pièce (2) de telle sorte qu'il vient en prise derrière un bord de butée correspondant à un premier bord de butée lors du déblocage du dispositif de retenue de l'unité de découpe à l'emporte-pièce (2) pour la fixation amovible de l'unité de découpe à l'emporte-pièce (2) dans le logement, et qu'il vient en prise derrière un bord de butée correspondant à un deuxième bord de butée dans une deuxième position de verrouillage afin d'activer le dispositif de retenue pour la fixation amovible de la poignée de poussoir (8) dans la position enfoncée, le collecteur de noyaux (1) présentant une taille telle que l'unité de découpe à l'emporte-pièce (2) arrêtée par le dispositif de retenue dans la position comprimée peut être insérée dans le collecteur de noyaux (1)

2. Dénoyauteur selon la revendication 1, **caractérisé en ce que** l'élément de verrouillage du verrouillage de poussoir (5) est fixé pivotant ou rotatif à l'unité de découpe à l'emporte-pièce (2).

3. Dénoyauteur selon la revendication 1, **caractérisé en ce que** l'élément de verrouillage du verrouillage de poussoir (5) est fixé coulissant longitudinalement à l'unité de découpe à l'emporte-pièce (2), la direction du coulissement étant arrangée notamment perpendiculairement à l'axe de travail (A).

4. Dénoyauteur selon la revendication 1, **caractérisé en ce que** le dispositif de retenue est formé d'un coulisseau ou d'un culbuteur qui vient en prise derrière un bord de butée du poussoir de perforation (7) avec une zone de blocage après un mouvement manuel dans la zone de mouvement du poussoir de perforation (7) de telle sorte que le ressort de rappel (11) pousse le bord de butée contre la zone de blocage et le poussoir de perforation (7) est maintenu dans la position enfoncée.

5. Dénoyauteur selon la revendication 1, **caractérisé en ce que** l'unité de découpe à l'emporte-pièce (2) présente une matrice de perforation (6) qui est disposée en dessous de la position de traitement du point de vue du poussoir de perforation (7) et présente au moins une ouverture de passage, à travers laquelle la partie inférieure du poussoir (7) peut être insérée pour couper puis extraire le noyau, le poussoir de perforation (7) étant logé pivotant dans le guide de poussoir (12) ou présentant une section inférieure pivotante ne pivotant pas en symétrie de rotation, et **en ce que** l'ouverture de passage de la matrice de perforation (6) est formée de telle sorte que la partie inférieure du poussoir de perforation (7) vient en prise derrière une bordure adjacente de l'ouverture de passage tout en laissant un jeu, notamment une fente circonférentielle, possible à travers l'ouverture de passage ou un fois le poussoir de perforation (7) pivoté entièrement ou uniquement la section inférieure pour former le dispositif de retenue.

6. Dénoyauteur selon la revendication 4, **caractérisé en ce que** la matrice de perforation (6) est un racleur en matière élastique, notamment en caoutchouc.

7. Dénoyauteur selon l'une des revendications précédentes, **caractérisé en ce que** le collecteur de noyaux (1) présente un bord de récipient supérieur avec une ouverture délimitée, une rehausse de récipient (3) supérieure, présentant le logement pour l'unité de découpe à l'emporte-pièce (2), à laquelle l'unité de découpe à l'emporte-pièce (2) est fixée amovible et présente le réservoir pour aliments (13), étant posée sur le bord du récipient, ledit réservoir pour aliments étant délimité notamment par la partie supérieure de la rehausse de récipient (3) et d'un bord de cette partie supérieure dérivant vers le haut.

8. Dénoyauteur selon l'une des deux revendications précédentes, **caractérisé en ce que** le guide de poussoir (12) présente un racleur au-dessus de l'aliment disposé, lequel racle l'aliment suspendu à la partie inférieure du poussoir de perforation (7) en réinitialisant le poussoir (7), l'axe de travail (A) étant basculé selon un angle par rapport à la verticale et le racleur étant disposé au-dessus d'une sortie des aliments (4) sur glissière inclinée vers le bas disposée devant la position de traitement.
